# EUROPEAN PATENT SPECIFICATION

(11) **EP 3 933 995 B1**
(45) Date of publication and mention of the grant of the patent: **12.02.2025**
(21) Application number: 20762722.5
(22) Date of filing: 21.02.2020
(51) Int. Cl.: H01M 50/489, H01M 10/052, H01M 10/0587, H01M 50/409, H01M 10/42, H01M 50/46, H01M 50/474, H01M 50/572

(54) **NON-AQUEOUS ELECTROLYTE SECONDARY BATTERY**
SEKUNDÄRBATTERIE MIT WASSERFREIEM ELEKTROLYT
BATTERIE SECONDAIRE À ÉLECTROLYTE NON AQUEUX

(30) Priority: 28.02.2019 JP 2019035250
(43) Date of publication of application: 05.01.2022
(73) Proprietor: Panasonic Intellectual Property Management Co., Ltd., Osaka-shi, Osaka 540-6207 (JP)
(72) Inventor: NOWATARI, Yuko, Chuo-ku, Osaka-shi, Osaka 540-6207 (JP); KAIDUKA, Atsushi, Chuo-ku, Osaka-shi, Osaka 540-6207 (JP); SUGII, Noriko, Chuo-ku, Osaka-shi, Osaka 540-6207 (JP)
(74) Representative: Vigand, Philippe
(86) International application number: PCT/JP2020/007018
(87) International publication number: WO 2020/175359

(56) References cited:
- WO-A1-03/063269
- WO-A1-2008/035806
- JP-A- 2003 022 794
- JP-A- 2003 022 794
- JP-A- 2010 061 819
- JP-A- 2012 033 268
- JP-A- 2014 139 865

## Description

### TECHNICAL FIELD

The present disclosure relates to a non-aqueous electrolyte secondary battery.

### BACKGROUND ART

There have widely been used non-aqueous electrolyte secondary batteries which house a winding-shaped electrode assembly having strip-shaped positive and negative electrodes wound with intervening separators in a metal-made battery case. PATENT LITERATURE 1 discloses a non-aqueous electrolyte secondary battery which provides restraint on thermal runaway of the battery due to impact from the outside in the charging state by using separators which satisfy predetermined tensile breaking strengths. PATENT LIETRATURE 2 discloses an electrode assembly and non-aqueous electrolyte battery. PATENT LITERATURE 3 discloses a nonaqueous electrolyte secondary battery.

### CITATION LIST

### PATENT LITERATURE

PATENT LITERATURE 1: Japanese Unexamined Patent Application Publication No. 2014-139865
PATENT LITERATURE 2: International Patent Application Publication (WO) No. 2008/035806
PATENT LITERATURE 3: Japanese Unexamined Patent Application Publication No. 2014-139865

### SUMMARY

### TECHNICAL PROBLEM

Now, it is an important problem, on a non-aqueous electrolyte secondary battery, to secure electric insulation between the positive electrode and the negative electrode. The insulation between the positive electrode and the negative electrode is evaluated, for example, with a breakdown test to measure a leak current flowing between the positive electrode and the negative electrode under application of high voltage to the electrode assembly that is still to be impregnated with an electrolytic solution. The breakdown test is performed in order to reject a defective product that is insufficient in terms of the insulation between the positive electrode and the negative electrode in the production process of the non-aqueous electrolyte secondary batteries. Accordingly, securing the insulation between the positive electrode and the negative electrode results in reduction of the fraction defective in the production process. The technology disclosed in PATENT LITERATURE 1 does not consider such insulation between the positive electrode and the negative electrode, and still has room for improvement.

It is an advantage of the present disclosure to provide a non-aqueous electrolyte secondary battery capable of enhancing insulation between a positive electrode and a negative electrode and restraining thermal runaway of the battery due to impact from the outside in the charging state.

### SOLUTION TO PROBLEM

The invention is defined in claim 1.

A non-aqueous electrolyte secondary battery which is an aspect of the present disclosure comprises a winding-shaped electrode assembly having a positive electrode and a negative electrode wound with a first separator and a second separator intervening therebetween, characterized in that the first separator is provided on an outer winding side of the positive electrode, the second separator is provided on an inner winding side of the positive electrode, and a piercing strength of the second separator is higher than a piercing strength of the first separator.

### ADVANTAGEOUS EFFECTS OF INVENTION

According to the non-aqueous electrolyte secondary battery according to the present disclosure, there may be enhanced the insulation between the positive electrode and the negative electrode and be restrained the thermal runaway of the battery due to the impact from the outside in the charging state.

### BRIEF DESCRIPTION OF DRAWINGS

FIG. 1 is a longitudinal sectional view of a non-aqueous electrolyte secondary battery which is an example of embodiments.
FIG. 2 is a perspective view of a winding-shaped electrode assembly of the nonaqueous electrolyte secondary battery shown in FIG. 1.

### DESCRIPTION OF EMBODIMENTS

Hereafter, an example of embodiments of a non-aqueous electrolyte secondary battery according to the present disclosure will be described in detail with reference to the drawings. Specific shapes, materials, numerical values, directions and the like in the following description are exemplary illustrations for facilitating understanding of the present disclosure, and can be properly modified to meet the specifications of a nonaqueous electrolyte secondary battery. Moreover, it has been originally supposed that, in the case where the following description includes a plurality of embodiments and modifications, their characteristic portions are properly combined and used.

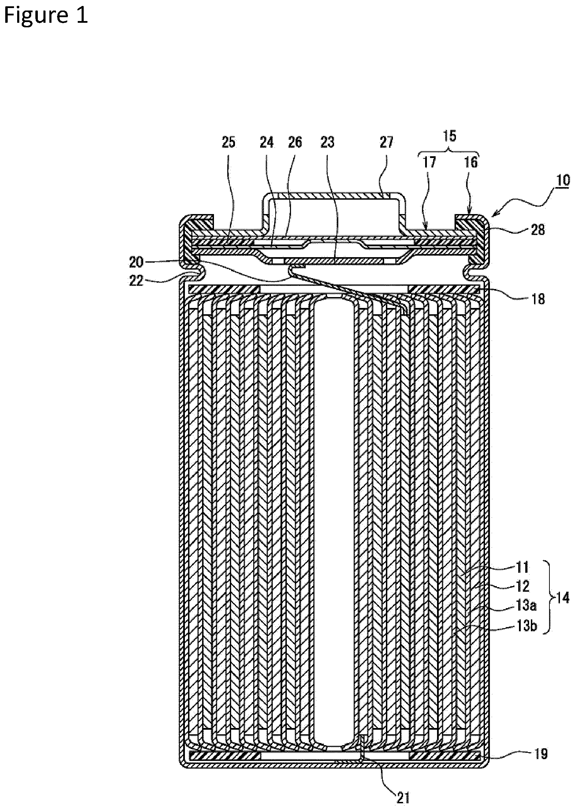

FIG. 1 is a longitudinal sectional view of a non-aqueous electrolyte secondary battery 10 which is an example of embodiments. As exemplarily shown in FIG. 1, the non-aqueous electrolyte secondary battery 10 has an electrode assembly 14 and a nonaqueous electrolyte (not shown) which are housed in a battery case 15. For a nonaqueous solvent (organic solvent) of the non-aqueous electrolyte, carbonates, lactones, ethers, ketones, esters, and the like can be used, and two kinds or more of these solvents can be mixed and used. For example, cyclic carbonates such as ethylene carbonate, propylene carbonate, and butylene carbonate, chain carbonates such as dimethyl carbonate, ethyl methyl carbonate, and diethyl carbonate, mixed solvents of the cyclic carbonates and the chain carbonates, and the like can be used. For an electrolyte salt of the non-aqueous electrolyte, LiPF₆, LiBF₄, LiCF₃SO₃, and the like, and mixtures of these can be used. The amount of the dissolved electrolyte salt relative to and in the non-aqueous solvent can be set, for example, to 0.5 to 2.0 mol/L.

An exterior member 16 and a sealing assembly 17 constitute the battery case 15. Insulating plates 18 and 19 are provided on and below on the electrode assembly 14, respectively. A positive electrode lead 20 extends to the sealing assembly 17 side through a through hole of the insulating plate 18 and is welded onto a lower surface of a filter 23 which is a bottom plate of the sealing assembly 17. In the non-aqueous electrolyte secondary battery 10, a cap 27 which is a top board of the sealing assembly 17 electrically connected to the filter 23 is a positive electrode terminal. Meanwhile, a negative electrode lead 21 extends to the bottom part side of the exterior member 16 through a through hole of the insulating plate 19 and is welded onto an inner surface of the bottom part of the exterior member 16. In the non-aqueous electrolyte secondary battery 10, the exterior member 16 is a negative electrode terminal. When the negative electrode lead 21 is installed in the vicinity of the outer winding end, the negative electrode lead 21 extends to the bottom part side of the battery case 15 through the outside of the insulating plate 18 and is welded onto an inner surface of the bottom part of the battery case 15.

The exterior member 16 is a bottomed cylindrical metal-made container. A gasket 28 is provided between the exterior member 16 and the sealing assembly 17 and the sealability of the interior of the battery case is secured. The exterior member 16 has a projecting portion 22 which is formed, for example, by pressing its lateral surface part from the outside and which supports the sealing assembly 17. The projecting portion 22 is preferably formed into an annular shape along the circumferential direction of the exterior member 16 and supports the sealing assembly 17 on its upper surface.

The sealing assembly 17 has the filter 23, a lower vent member 24, an insulating member 25, an upper vent member 26 and the cap 27 which are laminated sequentially from the electrode assembly 14 side. The members constituting the sealing assembly 17 have disc shapes or ring shapes, for example, and the members except the insulating member 25 are electrically connected to one another. The lower vent member 24 and the upper vent member 26 are connected to each other at their center parts, and the insulating member 25 interposes between their peripheral edges. When the internal pressure of the battery rises due to abnormal heat generation, the lower vent member 24 fractures, for example, this causes the upper vent member 26 to expand to the cap 27 side and to be separated from the lower vent member 24, and thereby, electric connection between these is interrupted. When the internal pressure further rises, the upper vent member 26 fractures, and gas is discharged from an opening of the cap 27.

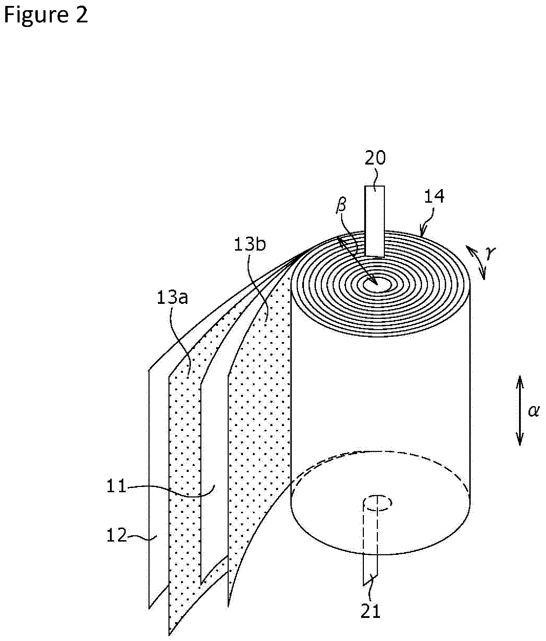

Hereafter, the electrode assembly 14 will be described in detail with reference to FIG. 2. FIG. 2 is a perspective view of the electrode assembly 14 in a winding shape of the non-aqueous electrolyte secondary battery 10 shown in FIG. 1. The electrode assembly 14 has a winding-shaped structure in which a positive electrode 11 and a negative electrode 12 are wound with a first separator 13a and a second separator 13b intervening therebetween. All of the positive electrode 11, the negative electrode 12, the first separator 13a and the second separator 13b are formed into strip shapes, which are wound into a spiral shape around the winding axis which is the center of the winding of the electrode assembly 14 into a state where they are alternately laminated in a radial direction β of the electrode assembly 14. On the electrode assembly 14, the longitudinal direction of the positive electrode 11 and the negative electrode 12 is a winding direction y, and the width direction of the positive electrode 11 and the negative electrode 12 is a winding axis direction α. Hereinafter, the longitudinal direction of the positive electrode 11 and the negative electrode 12 may be referred to as a longitudinal direction γ. Moreover, an inner winding side means the winding axis side in the radial direction β, and an outer winding side means the outside of the electrode assembly 14 in the radial direction β.

The positive electrode 11 has a strip-shaped positive electrode current collector, and a positive electrode active material layer formed on at least one of surfaces of the positive electrode current collector. In other words, the positive electrode 11 has a positive electrode active material layer including a positive electrode active material on at least one of its surfaces. The positive electrode active material layer is preferably formed on both sides of the positive electrode current collector. For the positive electrode current collector, there is used, for example, foil of a metal such as aluminum, a film having the metal disposed on its surface layer, or the like. A preferable positive electrode current collector is foil of metal the main component of which is aluminum or aluminum alloy. The thickness of the positive electrode current collector is 10 µm to 30 µm, for example.

The positive electrode active material layer is preferably formed in the whole region, on both sides of the positive electrode current collector, except a positive electrode exposed part mentioned later. The positive electrode active material layer preferably includes the positive electrode active material, a conductive agent, and a binder. The positive electrode 11 is produced, for example, by applying positive electrode slurry including the positive electrode active material, the conductive agent, the binder, and a solvent such as N-methyl-2-pyrrolidone (NMP) on both sides of the positive electrode current collector, and after that, drying and rolling it.

Examples of the positive electrode active material include lithium-containing composite oxides containing transition metal elements such as Co, Mn, and Ni. Although the lithium-containing composite oxides are not specially limited, they are preferably composite oxides represented by the general formula Li₁₊ₓMO₂ wherein -0.2<x≤0.2, and M includes at least one of the group consisting of Ni, Co, Mn, and Al.

Examples of the conductive agent include carbon materials such as carbon black (CB), acetylene black (AB), Ketjen black, and graphite, and the like. Examples of the binder can include fluorine-based resins such as polytetrafluoroethylene (PTFE) and polyvinylidene fluoride (PVdF), polyacrylonitrile (PAN), polyimide (PI), acrylic resins, polyolefin-based resins, and the like. Moreover, there may be used, together with these resins, carboxymethylcellulose (CMC) or its salt, polyethylene oxide (PEO), and the like. These may be used singly or in combinations of two or more thereof.

There is provided, on the positive electrode 11, the positive electrode exposed part from which a surface of the positive electrode current collector is exposed. The positive electrode exposed part is a portion to which the positive electrode lead 20 is connected and is a portion where the surface of the positive electrode current collector is not covered by the positive electrode active material layer. The positive electrode lead 20 is joined to the positive electrode exposed part, for example, by ultrasonic welding. A structure material of the positive electrode lead 20 is not specially limited as long as it has conductivity. The positive electrode lead 20 is preferably composed of metal the main component of which is aluminum.

The positive electrode exposed part can be provided, for example, in a center part of the positive electrode 11 in the longitudinal direction γ. Although the positive electrode exposed part may be formed shifting toward an end part of the positive electrode 11 in the longitudinal direction y, it is preferably provided at a position at substantially the same distances from both ends thereof in the longitudinal direction y, preferably, in view of current collectability. By connecting the positive electrode lead 20 to the positive electrode exposed part provided at such a position, the positive electrode lead 20 is to be arranged to protrude from an end face of the electrode assembly 14 in the winding axis direction α at the middle position thereof in the radial direction β as shown in FIG. 2 after the winding is made as the electrode assembly 14. The positive electrode exposed part is provided, for example, by intermittent application by which a part of the positive electrode current collector is not coated with the positive electrode slurry.

The negative electrode 12 has a strip shaped negative electrode current collector, and a negative electrode active material layer formed on at least one of surfaces of the negative electrode current collector. The negative electrode active material layer is preferably formed on both sides of the negative electrode current collector. For the negative electrode current collector, there is used, for example, foil of a metal such as copper, a film having the metal disposed on its surface layer, or the like. A preferable negative electrode current collector is foil of metal the main component of which is copper or copper alloy. The thickness of the negative electrode current collector is 5 µm to 30 µm, for example.

The negative electrode active material layer is preferably formed in the whole region, on both sides of the negative electrode current collector, except a negative electrode exposed part mentioned later. The negative electrode active material layer preferably includes a negative electrode active material and a binder. The negative electrode 12 is produced, for example, by applying negative electrode slurry including the negative electrode active material, the binder, water, and the like on both sides of the negative electrode current collector, and after that, drying and rolling it.

The negative electrode active material is not specially limited as long as it can reversibly store and release lithium ions and, for example, can employ carbon materials such as natural graphite and artificial graphite, metals alloyed with lithium, such as Si and Sn, alloys and oxides including these, and the like. For the binder included in the negative electrode active material layer, there are used, for example, fluorine-based resins such as polytetrafluoroethylene (PTFE) and polyvinylidene fluoride (PVdF), polyacrylonitrile (PAN), polyimide (PI), acrylic resins, polyolefin-based resins, and the like, similarly to the case of the positive electrode 11. In the case where the negative electrode slurry is prepared with an aqueous solvent, there can be used styrene-butadiene rubber (SBR), CMC or its salt, polyacrylic acid or its salt, polyvinyl alcohol, and the like. These may be used singly or in combinations of two or more thereof.

There is provided, on the negative electrode 12, the negative electrode exposed part from which a surface of the negative electrode current collector is exposed. The negative electrode exposed part is a portion to which the negative electrode lead 21 is connected and is a portion where the surface of the negative electrode current collector is not covered by the positive electrode active material layer. The negative electrode lead 21 is joined to the positive electrode exposed part, for example, by ultrasonic welding. A structure material of the negative electrode lead 21 is not specially limited as long as it has conductivity. The negative electrode lead 21 is preferably composed of metal the main component of which is nickel or copper, or of metal including both nickel and copper.

The negative electrode exposed part is provided, for example, in an inner end part of the negative electrode 12 in the longitudinal direction γ. In this case, as shown in FIG. 2, the negative electrode lead 21 is arranged to protrude from an end face of the electrode assembly 14 in the winding axis direction α at a center part thereof in the radial direction β. Herein, the inner end part and an outer end part mean the end part of the positive electrode 11 on the inner winding side, and the end part of the negative electrode 12 on the outer winding side, respectively. The negative electrode exposed part is provided, for example, by intermittent application by which a part of the negative electrode current collector is not coated with the negative electrode slurry. The arrangement position of the negative electrode lead 21 is not limited to that in the example shown in FIG. 2 but the negative electrode lead 21 may be provided in the outer end part of the negative electrode 12. Moreover, the negative electrode leads 21 may be provided in both the inner end part and the outer end part. In this case, the current collectability can be improved. The terminal end part of the negative electrode 12 may be electrically connected to the battery case 15 not using the negative electrode lead 21, by bringing an exposed part of the negative electrode 12 at the terminal end part into contact with the inner peripheral surface of the battery case 15.

As shown in FIG. 2, the first separator 13a is provided on the outer winding side of the positive electrode 11, and the second separator 13b is provided on the inner winding side of the positive electrode 11. The first separator 13a and the second separator 13b intervene between the positive electrode 11 and the negative electrode 12, and thereby, make the positive electrode 11 and the negative electrode 12 physically and electrically separated from each other. Moreover, the first separator 13a and the second separator 13b protect the positive electrode 11 and the negative electrode 12 upon reception of impact from the outside.

For the first separator 13a and the second separator 13b, there are used porous sheets having ion permeability and insulation properties. Specific examples of the porous sheets include microporous thin films, woven fabric, nonwoven fabric, and the like. For the materials of the bases of the first separator 13a and the second separator 13b, there can be used polyolefin-based resins such as polyethylene and polypropylene. The thicknesses of the first separator 13a and the second separator 13b are 10 µm to 50 µm, for example, and are preferably 9 µm to 17 µm. The first separator 13a and the second separator 13b have melting points, for example, of about 130°C to about 180°C.

The piercing strength of the second separator 13b is higher than the piercing strength of the first separator 13a. This can enhance the insulation between the positive electrode 11 and the negative electrode 12. The reason is considered as follows. When the positive electrode 11 and the negative electrode 12 are wound into spiral shapes, their active material layers that are on the respective inner winding sides are subject to compressive stress. Since the positive electrode 11 includes a hard active material, there is a case where the positive electrode active material layer cannot absorb the compressive stress. Therefore, the second separator 13b which is on the inner winding side of the positive electrode 11 is more subject to stress from a positive electrode mixture layer than the first separator 13a which is on the outer winding side thereof. Accordingly, enhancing the piercing strength of the second separator 13b leads to effective means for enhancing the insulation between the positive electrode 11 and the negative electrode 12. The piercing strengths are measured in conformity to the JIS standard, JIS Z-1707. A fixed piercing strength measurement sample (separator) is pricked with a semicircular needle having 1.0 mm of diameter and 0.5 mm of tip diameter at 50±5 mm/min of speed to measure the maximum stress until it is pierced by the needle. The measurements are performed on five piercing strength measurement samples which are sampled at random to set an average value of the measurement results as the value of the piercing strength of each separator.

Moreover, by providing the first separator 13a on the outer winding side of the positive electrode 11 and providing the second separator 13b on the inner winding side of the positive electrode 11, there are restrained the separators from fracturing in the case where the non-aqueous electrolyte secondary battery 10 receives the impact from the outside. Therefore, the thermal runaway can be restrained even when the impact from the outside is exerted on the non-aqueous electrolyte secondary battery 10 in the charging state. According to the invention, the first separator 13a lower in piercing strength has a higher coefficient of extension in the winding axis direction α than the second separator 13b. It is therefore inferred that the difference in coefficient of extension between the first separator 13a and the second separator 13b contributes to the restraint of the thermal runaway. Accordingly, by arranging the first separator 13a lower in piercing strength on the outer winding side of the positive electrode 11 and arranging the second separator 13b higher in piercing strength on the inner winding side of the positive electrode 11, there can be enhanced the insulation between the positive electrode 11 and the negative electrode 12 and be obtained the nonaqueous electrolyte secondary battery 10 that is strong against impact from the outside.

According to the invention, the first separator 13a has 3.0 N or more and less than 3.9 N of piercing strength, and 185% or more and 260% or less of coefficient of extension in the winding axis direction α, preferably 3.0 N or more and 3.7 N or less of piercing strength, and 185% or more and 220% or less of coefficient of extension in the winding axis direction α. According to the invention, the second separator 13b has 3.9 N or more and 6.0 N or less of piercing strength, and 170% or more and 240% or less of coefficient of extension in the winding axis direction α, preferably 3.9 N or more and 5.0 N or less of piercing strength, and 170% or more and 200% or less of coefficient of extension in the winding axis direction α.

The coefficients of extension in the winding axis direction α are measured in conformity to the JIS standard, JIS K-7127. The first separator 13a and the second separator 13b are cut to have 10 mm to 25 mm of widths and 150 mm or more of lengths to produce samples for measuring coefficients of extension. Each sample for measuring a coefficient of extension is attached to grippers such that its longitudinal direction coincides with the axis of the tester, there are measured tensile force and its extension during pulling the sample for measuring the coefficient of extension at a constant speed to measure the coefficient of extension in the winding axis direction α.

Moreover, when the negative electrode lead 21 is provided at the inner end part of the negative electrode 12 in the longitudinal direction y, there is a case where, at a site on the outer winding side of the negative electrode lead 21, the insulation between the positive electrode 11 and the negative electrode 12 lowers. Accordingly, when the negative electrode lead 21 is provided at the inner end part of the negative electrode 12 in the longitudinal direction y, there is significant the effect, of the present embodiment, of improving the insulation between the positive electrode 11 and the negative electrode 12.

The first separator 13a and the second separator 13b each is produced by extruding and shaping a polyolefin-based resin into a sheet shape, and after that, stretching it in the flow direction (MD: Machine Direction) and in the direction (TD: Transverse Direction) perpendicular to the flow direction simultaneously or sequentially to make it into a thin film. The stretching can make molecules in the polyolefin-based resin oriented, which leads to its crystallization and can improve its piercing strength. Meanwhile, a polyolefin-based resin has a predefined amount by which it can be stretched, and the stretching of those into thin films causes the coefficients of extension of the first separator 13a and the second separator 13b after made into the thin films to be made small. In other words, the first separator 13a and the second separator 13b have trade-off relation between the coefficients of extension and the piercing strengths.

### EXAMPLES

While the present disclosure will be hereinafter further described with examples, the present disclosure is not limited to these examples.

### <Examples>

### [Production of Positive Electrode]

As the positive electrode active material, there was used aluminum-containing lithium cobalt nickelate represented by LiNi_{0.88}Co_{0.09}Al_{0.03}O₂. 100 parts by mass of LiNi_{0.88}Co_{0.09}Al_{0.03}O₂, 1.0 part by mass of acetylene black, and 0.9 parts by mass of polyvinylidene fluoride (PVDF) were mixed, and an appropriate amount of N-methyl-2-pyrrolidone (NMP) was added to those to prepare the positive electrode slurry. Next, the positive electrode slurry was applied onto both sides of a long strip-shaped positive electrode current collector composed of aluminum foil with 15 µm of thickness, and the coating film was heated and dried at 100°C to 150°C. The dried coating film was compressed to have 0.144 mm of thickness using rolls, and after that, was cut to have 62.6 mm of width and 861 mm of length to produce the positive electrode having the positive electrode active material layers formed on both sides of the positive electrode current collector.

### [Production of Negative Electrode]

95 parts by mass of graphite, 5 parts by mass of Si oxide, 1 part by mass of carboxymethylcellulose (CMC), and 1 part by mass of styrene-butadiene rubber were mixed, and an appropriate amount of water was added to those to prepare the negative electrode slurry. Next, the negative electrode slurry was applied onto both sides of a long strip-shaped negative electrode current collector composed of copper foil with 8 µm of thickness, and the coating film was dried. The dried coating film was compressed to have 0.160 mm of thickness using rolls, and after that, was cut to have 64.2 mm of width and 959 mm of length to produce the negative electrode having the negative electrode active material layers formed on both sides of the negative electrode current collector.

### [Separators]

There were prepared two kinds of separators made of polyolefin-based resins. As the first separator, there was used a separator A having 15 µm of thickness, 3.8 N of piercing strength, and 247% of coefficient of extension in the winding axis direction. Moreover, as the second separator, there was used a separator B having 15 µm of thickness, 3.9 N of piercing strength, and 178% of coefficient of extension in the winding axis direction.

### [Preparation of Electrolytic Solution]

To 100 parts by mass of a mixed solvent composed of ethylene carbonate (EC) and dimethylmethyl carbonate (DMC) (EC:DMC=1:3 by volume), 5 parts by mass of vinylene carbonate (VC) was added. LiPF₆ was dissolved in the mixed solvent so as to be in 1.5 mol/L of concentration to prepare the electrolytic solution.

### [Breakdown Test]

Ten winding-shaped electrode assemblies were produced each by laminating, and then winding, the second separator, the positive electrode, the first separator and the negative electrode in this order from the inner winding side. To each of the electrode assemblies, 1200 V of AC voltage was applied in an atmosphere at 45°C, and it was examined whether 100 mA or more of current flowed therein. The electrode assembly(assemblies) that allowed 100 mA or more of current to flow was(were) taken as being defective and the other(s) was(were) taken as being good to calculate the fraction defective of those.

### [Impact Tests]

Two winding-shaped electrode assemblies were produced each by laminating, and then winding, the second separator, the positive electrode, the first separator and the negative electrode in this order from the inner winding side. Insulating plates were arranged on and below on the electrode assembly, and the electrode assembly was housed in the battery case. Next, a negative electrode lead was welded to the bottom part of the battery case, and a positive electrode lead was welded to a sealing assembly having a vent valve of internal pressure operation type. After that, after the electrolytic solution was injected into the interior of the battery case in a reduced pressure scheme, the opening end part of the battery case was sealed in such a manner that the opening end part of the battery case is crimped onto the sealing assembly across the gasket, for producing two cylinder-shaped secondary batteries. After the produced batteries were charged up to 3.75 V through constant current charging at 1410 mA (0.3 of hour rate) in an atmosphere at 25°C, they were charged through constant voltage charging at 3.75 V with 94 mA of cut-off current. After that, on one of the batteries, the test was conducted in conformity to the items for the T6 impact test under the UN test conditions for transport (causing 9.1 kg of weight to drop from 61 cm of height onto a metal-made round rod with 15.8 mm of diameter placed above on the center of the battery). On the other of the batteries, the test was conducted similarly to the one battery except that 9.1 kg of weight was caused to drop from 80 cm of height. It was examined whether or not firing from each battery and/or blowup of each battery arose within six hours after the tests. The case of no firing or blowup was taken as being good, and the other cases were taken as being defective.

### <Comparative Example 1>

Winding-shaped electrode assemblies were produced similarly to Example 1 except that the separators A were used for the first separator and the second separator.

### <Comparative Example 2>

Winding-shaped electrode assemblies were produced similarly to Example 1 except that the separators B were used for the first separator and the second separator.

### <Comparative Example 3>

Winding-shaped electrode assemblies were produced similarly to Example 1 except that the separator B was used for the first separator and the separator A was used for the second separator.

The evaluation results for the example and the comparative examples are presented in Table 1.

**[Table 1]**

| | Fraction Defective from Breakdown Test | Impact Test (Dropping Height: 61 cm) | Impact Test (Dropping Height: 80 cm) |
|---|---|---|---|
| Example 1 | 0/10 | Good | Good |
| Comparative Example 1 | 3/10 | Good | Good |
| Comparative Example 2 | 1/10 | Good | Defective |
| Comparative Example 3 | 2/10 | Good | Good |

In Example 1 where the separator A and the separator B were used for the first separator and the second separator, respectively, being defective did not arise in the breakdown test, and being good arose even in the impact test where the dropping height of the weight was 80 cm. Moreover, although in the impact tests where the dropping height of the weight was 61 cm, being good arose in all of the example and the comparative examples, being defective arose in the impact test with 80 cm of dropping height of the weight in Comparative Example 2 where the separators B were used on the inner winding side and on the outer winding side of the positive electrode, the separators having not very high coefficients of extension in the winding axis direction while having high piercing strengths. Comparative Example 2 is considered as resulting in being defective because the separators did not sufficiently extend when the cylinder-shaped secondary battery received the impact. Moreover, as to the breakdown tests, being defective arose in Comparative Examples 1 to 3, and in particular, being defective significantly arose in Comparative Examples 1 and 3 where the separator A low in piercing strength was installed on the inner winding side of the positive electrode. It has been found as above that the excellent results can be obtained in the breakdown test and the impact tests through the well-balanced arrangement of the two kinds of separators on the inner winding side and on the outer winding side of the positive electrode.

### REFERENCE SIGNS LIST

10 non-aqueous electrolyte secondary battery
11 positive electrode
12 negative electrode
13a first separator
13b second separator
14 electrode assembly
15 battery case
16 exterior member
17 sealing assembly
18, 19 insulating plate
20 positive electrode lead
21 negative electrode lead
22 projecting portion
23 filter
24 lower vent member
25 insulating member
26 upper vent member
27 cap
28 gasket

## Claims

1. A non-aqueous electrolyte secondary battery (10), comprising:
a winding-shaped electrode assembly (14) having a positive electrode (11) and a negative electrode (12) wound with a first separator (13a) and a second separator (13b) intervening therebetween; and
a battery case (15) housing the electrode assembly (14), wherein
the first separator (13a) is provided on an outer winding side of the positive electrode (11),
the second separator (13b) is provided on an inner winding side of the positive electrode (11), and
**characterized in that** the first separator (13a) has 3.0 N or more and less than 3.9 N of piercing strength, and 185% or more and 260% or less of coefficient of extension in a winding axis direction, and
the second separator (13b) has 3.9 N or more and 6.0 N or less of piercing strength, and 170% or more and 240% or less of coefficient of extension in the winding axis direction, wherein the piercing strength and the coefficient of extension are measured according to the description,
wherein the first separator (13a) has a higher coefficient of extension in the winding axis direction (α) than the second separator (13b).

2. The non-aqueous electrolyte secondary battery (10) according to claim 1, wherein
the positive electrode (11) has a positive electrode active material layer including a positive electrode active material on at least one of its surfaces, and
the positive electrode active material is a lithium-containing composite oxide.

## Patentansprüche

1. Sekundärbatterie (10) mit wasserfreiem Elektrolyt, umfassend:
eine wicklungsförmige Elektrodenbaugruppe (14), die eine Positivelektrode (11) und eine Negativelektrode (12) umfasst, die mit einem ersten Separator (13a) und einem zweiten Separator (13b) gewickelt sind, die dazwischenliegen; und
ein Batteriegehäuse (15), das die Elektrodenbaugruppe (14) unterbringt, wobei
der erste Separator (13a) auf einer äußeren Wicklungsseite der Positivelektrode (11) bereitgestellt ist,
der zweite Separator (13b) auf einer inneren Wicklungsseite der Positivelektrode (11) bereitgestellt ist, und
**dadurch gekennzeichnet, dass** der erste Separator (13a) eine Durchstoßfestigkeit von 3,0 N oder höher und niedriger als 3,9 N und einen Dehnungskoeffizienten in einer Wicklungsachsenrichtung von 185 % oder höher und 260 % oder niedriger aufweist, und
der zweite Separator (13b) eine Durchstoßfestigkeit von 3,9 N oder höher und 6,0 N oder niedriger und einen Dehnungskoeffizienten in der Wicklungsachsenrichtung von 170 % oder höher und 240 % oder niedriger aufweist, wobei die Durchstoßfestigkeit und der Dehnungskoeffizient gemäß der Beschreibung gemessen werden,
wobei der erste Separator (13a) einen höheren Dehnungskoeffizienten in der Wicklungsachsenrichtung (α) aufweist als der zweite Separator (13b).

2. Sekundärbatterie (10) mit wasserfreiem Elektrolyt nach Anspruch 1, wobei
die Positivelektrode (11) eine Positivelektroden-Aktivmaterialschicht aufweist, die ein Positivelektroden-Aktivmaterial auf mindestens einer ihrer Oberflächen umfasst, und
das Positivelektroden-Aktivmaterial ein lithiumhaltiges Verbundoxid ist.

## Revendications

1. Batterie rechargeable à électrolyte non aqueux (10) comprenant :
un assemblage d'électrodes en forme d'enroulement (14) ayant une électrode positive (11) et une électrode négative (12) enroulées avec un premier séparateur (13a) et un deuxième séparateur (13b) intervenant entre elles ; et
un boîtier de batterie (15) logeant l'assemblage d'électrodes (14),
dans laquelle
le premier séparateur (13a) est disposé sur le côté enroulement extérieur de l'électrode positive (11),
le deuxième séparateur (13b) est disposé sur le côté enroulement intérieur de l'électrode positive (11), et
**caractérisée en ce que**
le premier séparateur (13a) a une résistance à la perforation de 3,0 N ou plus et inférieure à 3,9 N, et un coefficient d'extension dans la direction de l'axe d'enroulement de 185 % ou plus et 260 % ou moins, et
le deuxième séparateur (13b) a une résistance à la perforation de 3,9 N ou plus et 6,0 N ou moins, et un coefficient d'extension dans la direction de l'axe d'enroulement de 170 % ou plus et 240 % ou moins,
dans laquelle la résistance à la perforation et le coefficient d'extension sont mesurés comme indiqué dans la description,
dans laquelle le premier séparateur (13a) a un coefficient d'extension dans la direction de l'axe d'enroulement (α) supérieur à celui du deuxième séparateur (13b).

2. Batterie rechargeable à électrolyte non aqueux (10) selon la revendication 1, dans laquelle
l'électrode positive (11) a une couche de matériau actif d'électrode positive incluant un matériau actif d'électrode positive sur au moins une de ses surfaces, et
le matériau actif d'électrode positive est un oxyde composite contenant du lithium.
